# EUROPEAN PATENT SPECIFICATION

(11) **EP 4 510 328 B1**
(45) Date of publication and mention of the grant of the patent: **18.11.2026**
(21) Application number: 23869740.3
(22) Date of filing: 15.06.2023
(51) Int. Cl.: H01M 50/186, H01M 50/188, H01M 50/531, H01M 50/103, H01M 50/15

(54) **BATTERY AND ELECTRONIC DEVICE**
BATTERIE UND ELEKTRONISCHE VORRICHTUNG
BATTERIE ET DISPOSITIF ÉLECTRONIQUE

(30) Priority: 27.09.2022 CN 202222586130 U
(43) Date of publication of application: 19.02.2025
(73) Proprietor: Zhuhai CosMX Battery Co., Ltd., Zhuhai, Guangdong 519180 (CN)
(72) Inventor: WEI, Zhida, Zhuhai, Guangdong 519180 (CN); XIE, Jichun, Zhuhai, Guangdong 519180 (CN); LI, Xilong, Zhuhai, Guangdong 519180 (CN)
(74) Representative: Elzaburu S.L.P.
(86) International application number: PCT/CN2023/100543
(87) International publication number: WO 2024/066491

(56) References cited:
- CN-A- 102 742 059
- CN-A- 114 597 610
- CN-U- 217 361 758
- CN-U- 218 385 470
- US-A1- 2015 229 006
- US-A1- 2016 099 444
- US-A1- 2016 268 582

## Description

### TECHNICAL FIELD

The present application relates to technical field of batteries, and in particular to a battery and an electronic device.

### BACKGROUND

Lithium-ion batteries have the advantages of light weight, high safety, and high energy density, and therefore have become the first choice for most portable electronic devices. An electronic device includes a device body, in which a lithium-ion battery is assembled. The lithium-ion battery is electrically connected to the device body and provides an energy source for the device body.

During use, the sealing and assembly reliability of lithium-ion batteries are crucial. The battery includes a housing, a battery cell module, pulling rivets and terminals. The housing has a cavity, and the battery cell module and the terminals are both located in the cavity. The terminals are connected to the battery cell module to electrically connect the battery cell module to external electronic elements, where the terminals are connected to the housing by the pulling rivets.

CN102742059A discloses a rectangular battery in which an electrode group (3) is housed inside a battery case (1) together with an electrolyte, wherein the electrode group (3) is configured such that a first polarity electrode plate and a second polarity electrode plate are wound with a porous insulator interposed therebetween and the battery case has a rectangular cross-sectional shape.

However, the sealing performance and reliability of the battery are poor in the above-described assembly method.

### SUMMARY

**In** order to solve at least one of the problems mentioned in the background, embodiments of the present application provide a battery and an electronic device, which can achieve a full-sealing effect on the assembly of a conductive member and ensure a tight fit between the conductive member and peripheral components thereof. Hence, the risk of short circuiting caused by gaps generated between the conductive member and its peripheral components can be avoided, and thus the risk of large-scale leakage of the battery can be avoided, which improves the sealing performance and reliability of the battery, improves the quality and mass production yield of the battery, and prolongs the service life of the battery. The present invention is as defined in the appended claims.

In order to achieve the above-mentioned object, a first aspect of an embodiment of the present application provides a battery, including a housing, a conductive member, a sealing assembly and a connecting and limiting member;
where the housing has a cavity, the conductive member is arranged in the cavity; the housing is provided with a first through hole, the conductive member is provided with a second through hole; the second through hole and the first through hole are arranged corresponding to and interconnected with each other, and at least part of the sealing assembly is located in the second through hole;
the connecting and limiting member is located in the cavity and has a limiting end penetrating through the second through hole along a direction from the cavity to outside of the housing and fitted with the sealing assembly located in the second through hole; the sealing assembly located in the second through hole is fitted with the conductive member.

In the above-mentioned battery, in a feasible implementation, the sealing assembly includes a first sealing member and a second sealing member; the first sealing member is disposed in the cavity and located in the second through hole;
the second sealing member is located outside the housing, at least part of the second sealing member penetrates through the first through hole and is located in the second through hole, and the first sealing member is sleeved between a hole wall of the second through hole and an outer wall of the second sealing member;
the limiting end penetrates through the second through hole and is fitted with the second sealing member located in the second through hole; the second sealing member located in the second through hole is fitted with the first sealing member; the first sealing member is fitted with the conductive member.

In the above-mentioned battery, in a feasible implementation, the second sealing member includes a sealing body and a sealing end, the sealing body is located outside the housing, and the sealing end is connected to a side of the sealing body close to the first through hole;
at least part of the sealing end penetrates through the first through hole and is located in the second through hole, and the first sealing member is sleeved between the hole wall of the second through hole and an outer wall of the sealing end;
the limiting end penetrates through the second through hole and is fitted with the sealing end located in the second through hole, and the sealing end located in the second through hole is fitted with the first sealing member.

In the above-mentioned battery, in a feasible implementation, the connecting and limiting member includes a connecting body and the limiting end, the limiting end is connected to the connecting body, and the limiting end is an end portion of the connecting and limiting member away from the first through hole;
the connecting body sequentially penetrates through the second through hole and the first through hole, the limiting end penetrates through the second through hole and is fitted with the sealing end located in the second through hole, and the sealing end located in the second through hole is fitted with the first sealing member.

In the above-mentioned battery, in a feasible implementation, further included is a first insulating member arranged in the cavity and located between the conductive member and the housing;
where the first insulating member is provided with a first penetrating hole, and the first penetrating hole is arranged corresponding to and interconnected with the first through hole and the second through hole, respectively.

In the above-mentioned battery, in a feasible implementation, further included is a second insulating member arranged outside the housing and located between the second sealing member and the housing;
where the second insulating member is provided with a second penetrating hole, and the second penetrating hole is arranged corresponding to and interconnected with the first penetrating hole, the first through hole and the second through hole, respectively.

In the above-mentioned battery, in a feasible implementation, the conductive member includes a conductive body and a limiting boss, and the limiting boss is arranged on a side of the conductive body close to the first through hole;
the second through hole includes a first sub-through hole and a second sub-through hole which are connected to each other, the first sub-through hole runs through the conductive body, and the second sub-through hole runs through the limiting boss;
the first sealing member is located in the first sub-through hole, at least part of the sealing end is located in the first sub-through hole; the limiting end is located in the first sub-through hole, and the limiting boss abuts against the limiting end.

In the above-mentioned battery, in a feasible implementation, further included are a battery cell body, a tab assembly and a flange;
where the battery cell body is arranged in the cavity, the tab assembly is arranged on a side of the battery cell body close to the first through hole, and the conductive member is connected to the tab assembly;
the flange is arranged on the battery cell body.

In the above-mentioned battery, in a feasible implementation, at least one of the connecting and limiting member and the sealing body is a rigid member, and at least one of the first sealing member and the sealing end is an elastic member.

In the above-mentioned battery, in a feasible implementation, the connecting and limiting member is a solid column, and at least one of the first sealing member and the sealing end of the second sealing member is a hollow column;
an inner diameter of the first sealing member is larger than an outer diameter of the sealing end, and/or an outer diameter of the limiting end is larger than an inner diameter of the sealing end.

A second aspect of an embodiment of the present application further provides an electronic device, including a device body and the above-mentioned battery, where the device body has a cavity, and the battery is disposed in the cavity;
the battery is electrically connected to the device body and is configured to supply power to the device body.

According to the battery and the electronic device provided in the present application, by including a housing having a cavity in which a conductive member is arranged, the cavity can protect the conductive member; by providing a first through hole and a second through hole on the housing and the conductive member, respectively, the electrolyte can be injected into the battery cell body through the first through hole and the second through hole to ensure that the positive and negative tabs of the battery are electrically connected; by including a sealing assembly and a connecting and limiting member, a sealed connection state of the conductive member can be formed, and a full-sealing effect on the assembly of the conductive member is achieved, ensuring a tight fit between the conductive member and its peripheral components, thereby avoiding the risk of short circuiting caused by gaps generated between the conductive member and its peripheral components, and further avoiding the risk of large-scale leakage of the battery, which is conducive to improving the sealing performance and reliability of the battery, improving the quality and mass production yield of the battery, and prolonging the service life of the battery.

In addition to the technical problems solved by the embodiments of the present application, the technical features that constitute the technical solutions, and the beneficial effects brought about by the technical features of these technical solutions as described above, other technical problems that can be solved by the battery and the electronic device provided by the embodiments of the present application, other technical features included in the technical solutions, and the beneficial effects brought about by these technical features will be further described in detail in specific embodiments.

### BRIEF DESCRIPTION OF DRAWINGS

In order to more clearly illustrate the embodiments of the present application or the technical solutions in the prior art, the drawings used in the description of the embodiments or the prior art will be briefly introduced below. Obviously, the drawings described below are intended for some embodiments of the present application. For those skilled in the art, other drawings can also be obtained based on these drawings without any creative effort.
FIG. 1 is a schematic structural diagram of a battery according to an embodiment of the present application.
FIG. 2 is a partial enlarged schematic diagram of part I in FIG. 1.
FIG. 3 is a schematic structural diagram of a housing and a sealing assembly of a battery before assembly according to an embodiment of the present application.
FIG. 4 is a schematic structural diagram of a housing, a sealing assembly, and a connecting and limiting member of a battery before assembly according to an embodiment of the present application.
FIG. 5 is a schematic structural diagram of a housing and a sealing assembly of an assembled battery according to an embodiment of the present application.
FIG. 6 is a schematic structural diagram of a housing, a sealing assembly, and a connecting and limiting member of an assembled battery according to an embodiment of the present application.

### Description of the reference numerals:

100-battery; 110-housing; 111-cavity; 112-first through hole; 120-conductive member; 121-second through hole; 1211-first sub-through hole; 1212-second sub-through hole; 122-conductive body; 123-limiting boss; 130-connecting and limiting member; 131-connecting body; 132-limiting end; 140-sealing assembly; 141-first sealing member; 142-second sealing member; 1421-sealing body; 1422-sealing end; 150-first insulating member; 151-first penetrating hole; 160-second insulating member; 161-second penetrating hole; 170-battery cell body; 180-tab assembly; 181-soft tab; 182-hard tab; 190-flange; 200-supporting member; 300-packaging member.

### DESCRIPTION OF EMBODIMENTS

The battery includes a housing, a battery cell module, pulling rivets and terminals, etc. The housing has a cavity, and the battery cell module and the terminals are both located in the cavity. The battery cell module includes a battery cell body and tabs, the tabs are connected to the battery cell body, and the terminals are connected to the tabs, to electrically connect the battery cell module and external electronic elements. The terminals are connected to the housing through the pulling rivets.

Through holes are respectively provided on the terminal and the housing, and the pulling rivet penetrates through the through holes sequentially to connect the terminal to the housing. However, in the related art, since the terminal is often of a sheet structure, when the pulling rivet is used to connect and fix the terminal, the edge of the terminal is often prone to warping, which can easily cause gaps between the terminal and the peripheral components thereof and thus cause the risk of short circuiting.

In order to solve the above technical problems, the present application provides a battery and an electronic device. By including a housing having a cavity in which the conductive member is arranged, the cavity can protect the conductive member; by respectively providing a first through hole and a second through hole on the housing and the conductive member, the electrolyte can be injected into the battery cell body through the first through hole and the second through hole to ensure that the positive electrode tab and the negative electrode tab of the battery are electrically connected; by including a sealing assembly and a connecting and limiting member, a sealed connection state of the conductive member can be formed, and a full-sealing effect on the assembly of conductive member can be achieved, a tight fit between the conductive member and the peripheral components thereof can be ensured, thereby avoiding the risk of short circuiting caused by gaps generated between the conductive member and its peripheral components, and further avoiding the risk of large-scale leakage of the battery, which is conducive to improving the sealing performance and reliability of the battery, improving the quality and mass production yield of the battery, and prolonging the service life of the battery.

In order to make the object, technical solutions and advantages of the embodiments of the present application clearer, the technical solutions in the embodiments of the present application will be clearly and comprehensively described below with reference to the drawings in the embodiments of the present application. Obviously, the described embodiments are only part of the embodiments of the present application, not all of the embodiments. Based on the embodiments in the present application, all other embodiments obtained by those skilled in the art without any creative effort shall fall within the scope of protection of the present application.

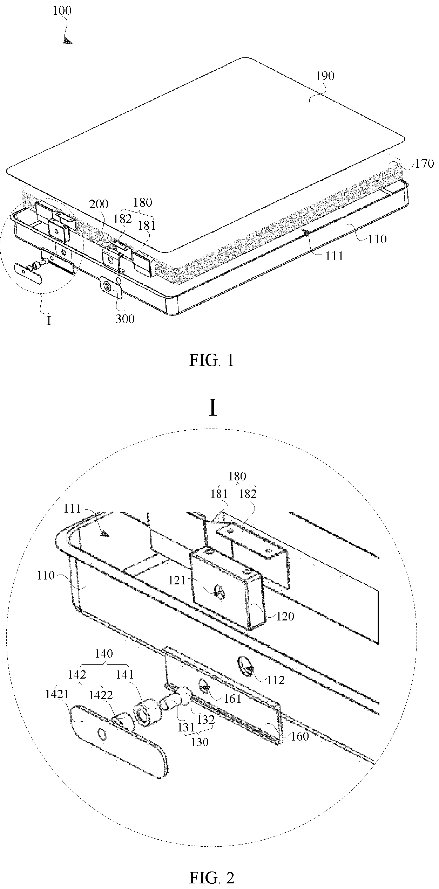

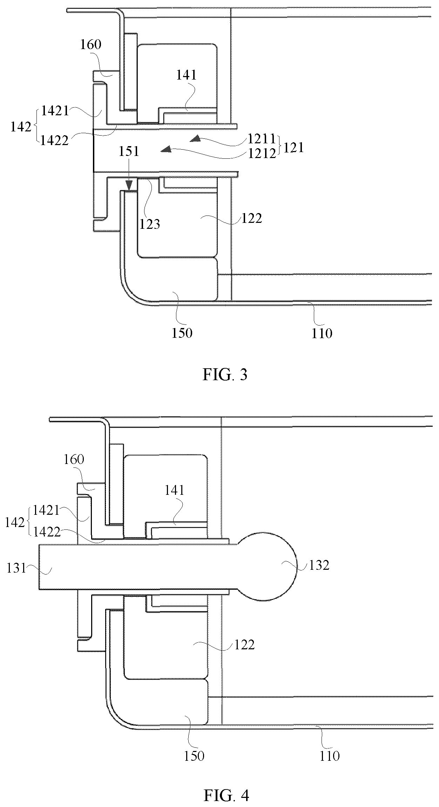

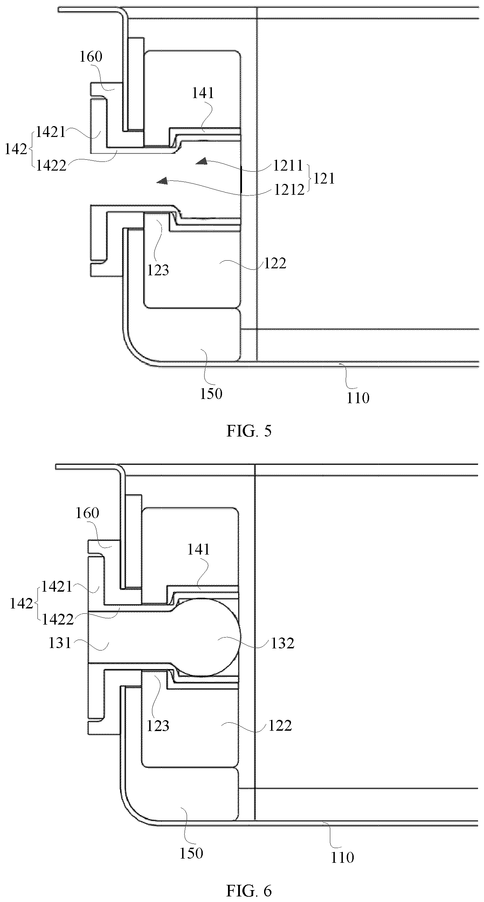

FIG. 1 is a schematic structural diagram of a battery according to an embodiment of the present application, FIG. 2 is a partial enlarged schematic diagram of part I in FIG. 1, FIG. 3 is a schematic structural diagram of a housing and a sealing assembly of a battery before assembly according to an embodiment of the present application, FIG. 4 is a schematic structural diagram of a housing, a sealing assembly, and a connecting and limiting member of a battery before assembly according to an embodiment of the present application, FIG. 5 is a schematic structural diagram of a housing and a sealing assembly of an assembled battery according to an embodiment of the present application, and FIG. 6 is a schematic structural diagram of a housing, a sealing assembly, and a connecting and limiting member of an assembled battery according to an embodiment of the present application.

### Embodiment 1

With reference to FIG. 1 and FIG. 2, an embodiment of the present application provides a battery 100, including a housing 110, a conductive member 120, a sealing assembly 140 and a connecting and limiting member 130; the housing 110 has a cavity 111, the conductive member 120 is arranged in the cavity 111, the housing 110 is provided with a first through hole 112, the conductive member 120 is provided with a second through hole 121, the second through hole 121 and the first through hole 112 are arranged corresponding to and interconnected with each other, and at least part of the sealing assembly 140 is located in the second through hole 121.

The connecting and limiting member 130 is located in the cavity 111. During assembly, firstly, with reference to FIG. 2 to FIG. 4, the connecting and limiting member 130 sequentially penetrates through the second through hole 121 and the first through hole 112 along a direction from the cavity 111 to the outside of the housing 110.

With continued reference to FIG. 5 and FIG. 6, the connecting and limiting member 130 has a limiting end 132. When the limiting end 132 penetrates through and is located in the second through hole 121, the limiting end 132 is fitted with the sealing assembly 140 located in the second through hole 121, causing the sealing assembly 140 located in the second through hole 121 to deform. At the same time, the sealing assembly 140 located in the second through hole 121 will continuously squeeze the conductive member 120 under the action of the deformation force to ensure a tight fit between the conductive member 120 and its peripheral components and form a sealed connection state of the conductive member 120.

It should be noted that the fitting in the present embodiment can be squeezing, to ensure that the sealing assembly 140 located in the second through hole 121 is deformed under the action of the connecting and limiting member 130, thereby ensuring a tight fit between the conductive member 120 and its peripheral components, the higher the degree of tight fit for assembly, the better the sealing connection effect.

In addition, in the present embodiment, the conductive member 120 is of a block structure, which is different from the sheet structure in the related art. In this way, when the connecting and limiting member 130 is connected and fixed to the conductive member 120, the edge of the conductive member 120 will not have the problem of warping, further avoiding the risk of short circuiting caused by gaps generated between the conductive member 120 and its peripheral components.

It should be noted that the first through hole 112 and the second through hole 121 in the present embodiment can not only be used for the connecting and limiting member 130 to penetrate through, but also the first through hole 112 and the second through hole 121 can be served as electrolyte injection holes, through which the electrolyte can be injected into the battery cell body 170.

In a feasible implementation, with reference to FIG. 2 to FIG. 6, the sealing assembly 140 includes a first sealing member 141 and a second sealing member 142, the first sealing member 141 being disposed in the cavity 111, and the first sealing member 141 being located in the second through hole 121.

During assembly, as shown in FIG. 2 to FIG. 4, the second sealing member 142 is located outside the housing 110, at least part of the second sealing member 142 penetrates through the first through hole 112 and is located in the second through hole 121, and the first sealing member 141 is sleeved between a hole wall of the second through hole 121 and an outer wall of the second sealing member 142.

With continued reference to FIG. 5 and FIG. 6, when the limiting end 132 penetrates through and is located in the second through hole 121, its end portion squeezes the second sealing member 142 located in the second through hole 121, causing the second sealing member 142 located in the second through hole 121 to deform. Under the action of the deformation force, the second sealing member 142 continuously squeezes the first sealing member 141, and the first sealing member 141 squeezes the conductive member 120, thereby ensuring a tight fit between the conductive member 120 and its peripheral components and forming a sealed connection state of the conductive member 120.

In a feasible implementation, with reference to FIG. 2 to FIG. 6, the second sealing member 142 includes a sealing body 1421 and a sealing end 1422, the sealing body 1421 is located outside the housing 110, and the sealing end 1422 is connected to a side of the sealing body 1421 close to the first through hole 112.

During assembly, with reference to FIG. 2 to FIG. 4, at least part of the sealing end 1422 penetrates through the first through hole 112 and is located in the second through hole 121, and the first sealing member 141 is sleeved on the outside of the sealing end 1422 located in the second through hole 121.

With continued reference to FIG. 5 and FIG. 6, when the limiting end 132 penetrates through and is located in the second through hole 121, its end portion squeezes the sealing end 1422 located in the second through hole 121, causing the sealing end 1422 located in the second through hole 121 to deform. Under the action of the deformation force, the sealing end 1422 continuously squeezes the first sealing assembly 141, and the first sealing assembly 141 squeezes the conductive member 120, thereby forming a sealed connection state of the conductive member 120.

In a feasible implementation, with reference to FIG. 2, FIG. 4 and FIG. 6, the connecting and limiting member 130 includes a connecting body 131, the limiting end 132 is connected to the connecting body 131, and the limiting end 132 is an end portion of the connecting and limiting member 130 away from the first through hole 112.

During assembly, the connecting body 131 penetrates through the second through hole 121 and the first through hole 112 in sequence. When the limiting end 132 penetrates through and is located in the second through hole 121, the limiting end 132 squeezes the sealing end 1422, causing the sealing end 1422 located in the second through hole 121 to deform. Under the action of the deformation force, the sealing end 1422 continuously squeezes the first sealing assembly 141, and the first sealing assembly 141 squeezes the conductive member 120, thereby forming a sealed connection state of the conductive member 120.

In a feasible implementation, with reference to FIG. 3 to FIG. 6, a first insulating member 150 may be further included. The first insulating member 150 is disposed in the cavity 111. The first insulating member 150 is located between the conductive member 120 and the housing 110.

A first penetrating hole 151 is provided on the first insulating member 150, and the first penetrating hole 151 is arranged corresponding to and interconnected with the first through hole 112 and the second through hole 121, respectively. During assembly, the connecting and limiting member 130 sequentially penetrates through the second through hole 121, the first penetrating hole 151 and the first through hole 112 to connect the conductive member 120 to the housing 110.

By including the first insulating member 150, the conductive member 120 and the housing 110 are conveniently connected and can be insulated from each other. In addition, the positive electrode and the negative electrode can be separated, so as to avoid short circuiting caused by contact between the positive electrode and the negative electrode, thereby improving the safety performance of the battery 100.

In a feasible implementation, with reference to FIG. 2 to FIG. 6, a second insulating member 160 may be further included. The second insulating member 160 is disposed outside the housing 110, and the second insulating member 160 is located between the second sealing member 142 and the housing 110.

A second penetrating hole 161 is provided on the second insulating member 160, and the second penetrating hole 161 is arranged corresponding to and interconnected with the first penetrating hole 151, the first through hole 112 and the second through hole 121, respectively. During assembly, the connecting and limiting member 130 sequentially penetrates through the second through hole 121, the first penetrating hole 151, the first through hole 112 and the second penetrating hole 161 to connect the conductive member 120 to the housing 110.

It should be noted that, in the present embodiment, the first insulating member 150 can be a first insulating glue, and the second insulating member 160 can be a second insulating glue, in this way, on the basis of satisfying the insulation requirements, they can also play a role of bonding and sealing, so that the sealing performance thereof is better, thereby maximizing the sealing performance and reliability of the battery 100, improving the quality and mass production yield of the battery 100, and prolonging the service life of the battery 100.

In addition, the first insulating member 150 and the second insulating member 160 may also be insulating sheets, which may be polyethylene sheets, polypropylene sheets, or sheet structures obtained by mixing polyethylene and polypropylene.

In a feasible implementation, as shown in FIG. 3, the conductive member 120 may include a conductive body 122 and a limiting boss 123, and the limiting boss 123 is disposed on a side of the conductive body 122 close to the first through hole 112.

With continued reference to FIG. 3 and FIG. 5, the second through hole 121 includes a first sub-through hole 1211 and a second sub-through hole 1212 that are connected to each other. The first sub-through hole 1211 runs through the conductive body 122, and the second sub-through hole 1212 runs through the limiting boss 123.

The first sealing member 141 is located in the first sub-through hole 1211, at least part of the sealing end 1422 is located in the first sub-through hole 1211, the limiting end 132 is located in the first sub-through hole 1211, and the limiting boss 123 limits the limiting end 132.

By including the limiting boss 123, during assembly, when the limiting end 132 penetrates through and is located in the first sub-through hole 1211, the limiting boss 123 limits the limiting end 132, which can prevent the limiting end 132 from escaping from the first sub-through hole 1211 and the second sub-through hole 1212, thereby ensuring that the limiting end 132 squeezes the sealing end 1422 to the greatest extent.

In a feasible implementation, as shown in FIG. 1, a battery cell body 170, a tab assembly 180 and a flange 190 are further included, where the battery cell body 170 is disposed in the cavity 111, the tab assembly 180 is disposed on a side of the battery cell body 170 close to the first through hole 112, the conductive member 120 is connected to the tab assembly 180, and the flange 190 is disposed on the battery cell body 170. In addition, in the present embodiment, a packaging member 300 and a supporting member 200 are also included. The packaging member 300 can achieve sealing of the battery 100.

With continued reference to FIG. 1 and FIG. 2, the tab assembly 180 includes a hard tab 182 and a soft tab 181. The soft tab 181 is connected to the battery cell body 170, and the hard tab 182 is respectively connected to the soft tab 181 and the supporting member 200. By including the hard tab 182, it is convenient to lead out the soft tab 181 and be connected to the supporting member 200. By including the supporting member 200 serving as a connecting bridge between the tab assembly 180 and the conductive member 120, the connection area is large, thereby ensuring a good electrical connection between the tab assembly 180 and the conductive member 120. In addition, the supporting member 200 can also play a role of supporting, which can ensure smoothness and stability during overlap connection and further improve reliability during assembly.

By including a flange 190 arranged on the battery cell body 170, when the battery cell body 170 or the conductive member 120 is subjected to external pulling force, the pulling force can be resisted by the connection between the flange 190 and the battery cell body 170, thereby improving the ability of the battery cell body 170 to resist external pulling force or pressure load, improving the reliability of the battery cell body 170, and avoiding the risk of leakage.

In a feasible implementation, the connecting and limiting member 130 may be a rigid member, or the sealing body 1421 may be a rigid member, or both the connecting and limiting member 130 and the sealing body 1421 may be rigid members.

The first sealing member 141 may be an elastic member, or the sealing end 1422 may be an elastic member, or both the first sealing member 141 and the sealing end 1422 may be elastic members.

By providing the connecting and limiting member 130 as a rigid member, when the limiting end 132 of the connecting and limiting member 130 squeezes the sealing end 1422, the limiting end 132 itself will not deform, thereby ensuring that the limiting end 132 squeezes the sealing end 1422.

In addition, by providing the sealing body 1421 as a rigid member, the sealing body 1421 is connected to the outside of the housing 110 in a sealing manner. It has a certain rigidity and will not deform, thereby ensuring a good sealing for the housing 110, thereby maximizing the sealing performance and reliability of the battery 100, improving the quality and mass production yield of the battery 100, and prolonging the service life of the battery 100.

It is understandable that the rigid material can be made of cement and sand, or a small amount of additives, high molecular polymers and other materials can be added therein. It should be noted that, in the present embodiment, there is no specific limitation on the material of the connecting and limiting member 130, and as long as it has a certain rigidity, it belongs to the protection scope of the present application.

By providing the first sealing member 141 and the sealing end 1422 as elastic members, the limiting end 132 can squeeze the sealing end 1422, and the sealing end 1422 can squeeze the first sealing member 141, thereby facilitating deformation of both the sealing end 1422 and the first sealing member 141.

In a feasible implementation, with reference to FIG. 3 and FIG. 4, the connecting and limiting member 130 is a solid column, the first sealing member 141 is a hollow column, and the sealing end 1422 of the second sealing member 142 is a hollow column.

By providing the connecting and limiting member 130 as a column, it is convenient to penetrate through the second through hole 121 and the first through hole 112. In the present embodiment, the shape of the limiting end 132 of the connecting and limiting member 130 can be a circular shape, which is smoother, making it easier to assemble and disassemble. In addition, the circular shape has no sharp corners and will not scratch other components.

By providing the first sealing member 141 as a hollow column, it is convenient to be sleeved on the outside of the sealing end 1422. Similarly, by providing the sealing end 1422 of the second sealing member 142 as a hollow column, it is convenient to be sleeved on the outside of the limiting end 132.

The inner diameter of the first sealing member 141 is larger than the outer diameter of the sealing end 1422, and the outer diameter of the limiting end 132 is larger than the inner diameter of the sealing end 1422, to facilitate the assembly among the first sealing member 141, the limiting end 132 and the sealing end 1422.

It should be noted that the size ranges of the first sealing member 141, the limiting end 132 and the sealing end 1422 are not further limited and can be specifically set according to actual conditions.

### Embodiment 2

On the basis of the above-mentioned Embodiment 1, an embodiment of the present application further provides an electronic device, including a device body and the above-mentioned battery 100, the device body has a chamber, and the battery 100 is disposed in the chamber. The battery 100 is electrically connected to the device body and is configured to supply power to the device body.

It should be noted that the device body in the present embodiment can be the housing of the device. In addition, the electronic device can be a wearable electronic device, for example, a watch, a mobile phone, a sports bracelet, etc.; or, the electronic device can be other electronic products, which is not further limited in the present embodiment.

Other technical features are the same as those in Embodiment 1 and can achieve the same technical effects, which will not be described in detail here.

The electronic device provided in the present embodiment includes the above-mentioned battery 100, and for the battery 100, by including a housing 110 having a cavity 111 in which the conductive member 120 is arranged, the cavity 111 can protect the conductive member 120; by respectively providing a first through hole 112 and a second through hole 121 on the housing 110 and the conductive member 120, the electrolyte can be injected into the battery cell body 170 through the first through hole 112 and the second through hole 121 to ensure that positive and negative electrode tabs of the battery 100 are electrically connected; by including the sealing assembly 140 and the connecting and limiting member 130, a sealed connection state of the conductive member 120 can be formed, and a full-sealing effect on the assembly of the conductive member 120 can be achieved, thereby ensuring a tight fit between the conductive member 120 and its peripheral components, avoiding the risk of short circuiting caused by gaps generated between the conductive member 120 and its peripheral components, and further avoiding the risk of large-scale leakage of the battery 100, which is conducive to improving the sealing performance and reliability of the battery 100, improving the quality and mass production yield of the battery 100, and prolonging the service life of the battery 100.

Finally, it should be noted that: the above embodiments are only used to illustrate the technical solutions of the present application, rather than limiting them. Although the present application has been described in detail with reference to the foregoing embodiments, those of ordinary skill in the art should understand that: it is still possible to modify the technical solutions described in the foregoing embodiments in the scope of the claims attached.

## Claims

1. A battery (100), comprising: a housing (110), a conductive member (120), a sealing assembly (140) and a connecting and limiting member (130);
wherein the housing (110) has a cavity (111), the conductive member (120) is arranged in the cavity (111); the housing (110) is provided with a first through hole (112), the conductive member (120) is provided with a second through hole (121); the second through hole (121) and the first through hole (112) are arranged corresponding to and interconnected with each other, and at least part of the sealing assembly (140) is located in the second through hole (121);
the connecting and limiting member (130) is located in the cavity (111) and has a limiting end (132) penetrating through the second through hole (121) along a direction from the cavity (111) to outside of the housing (110) and fitted with the sealing assembly (140) located in the second through hole (121); the sealing assembly (140) located in the second through hole (121) is fitted with the conductive member (120);
**characterized in that**: the conductive member (120) comprises a conductive body (122) and a limiting boss (123), and the limiting boss (123) is arranged on a side of the conductive body (122) close to the first through hole (112);
the second through hole (121) comprises a first sub-through hole (1211) and a second sub-through hole (1212) which are connected to each other, the first sub-through hole (1211) runs through the conductive body (122), and the second sub-through hole (1212) runs through the limiting boss (123).

2. The battery (100) according to claim 1, wherein the sealing assembly (140) comprises: a first sealing member (141) and a second sealing member (142); the first sealing member (141) is disposed in the cavity (111) and located in the second through hole (121);
the second sealing member (142) is located outside the housing (110), at least part of the second sealing member (142) penetrates through the first through hole (112) and is located in the second through hole (121), and the first sealing member (141) is sleeved between a hole wall of the second through hole (121) and an outer wall of the second sealing member (142);
the limiting end (132) penetrates through the second through hole (121) and is fitted with the second sealing member (142) located in the second through hole (121); the second sealing member (142) located in the second through hole (121) is fitted with the first sealing member (141); the first sealing member (141) is fitted with the conductive member (120).

3. The battery (100) according to claim 2, wherein the second sealing member (142) comprises: a sealing body (1421) and a sealing end (1422), the sealing body (1421) is located outside the housing (110), and the sealing end (1422) is connected to a side of the sealing body (1421) close to the first through hole (112);
at least part of the sealing end (1422) penetrates through the first through hole (112) and is located in the second through hole (121), and the first sealing member (141) is sleeved between the hole wall of the second through hole (121) and an outer wall of the sealing end (1422);
the limiting end (132) penetrates through the second through hole (121) and is fitted with the sealing end (1422) located in the second through hole (121), and the sealing end (1422) located in the second through hole (121) is fitted with the first sealing member (141).

4. The battery (100) according to claim 3, wherein the connecting and limiting member (130) comprises a connecting body (131); the limiting end (132) is connected to the connecting body (131) at an end portion away from the first through hole (112);
the connecting body (131) sequentially penetrates through the second through hole (121) and the first through hole (112), the limiting end (132) penetrates through the second through hole (121) and is fitted with the sealing end (1422) located in the second through hole (121), and the sealing end (1422) located in the second through hole is fitted with the first sealing member (141).

5. The battery (100) according to any one of claims 2 to 4, further comprising: a first insulating member (150) arranged in the cavity (111) and located between the conductive member (120) and the housing (110);
wherein the first insulating member (150) is provided with a first penetrating hole (151), and the first penetrating hole (151) is arranged corresponding to and interconnected with the first through hole (112) and the second through hole (121), respectively.

6. The battery (100) according to claim 5, further comprising: a second insulating member (160) arranged outside the housing (110) and located between the second sealing member (142) and the housing (110);
wherein the second insulating member (160) is provided with a second penetrating hole (161), and the second penetrating hole (161) is arranged corresponding to and interconnected with the first penetrating hole (151), the first through hole (112) and the second through hole (121), respectively.

7. The battery (100) according to claim 4, wherein the first sealing member (141) is located in the first sub-through hole (1211), at least part of the sealing end (1422) is located in the first sub-through hole (1211); the limiting end (132) is located in the first sub-through hole (1211), and the limiting boss (123) abuts against the limiting end (132).

8. The battery (100) according to any one of claims 1 to 4, further comprising: a battery cell body (170), a tab assembly (180) and a flange (190);
wherein the battery cell body (170) is arranged in the cavity (111), the tab assembly (180) is arranged on a side of the battery cell body (170) close to the first through hole (112), and the conductive member (120) is connected to the tab assembly (180);
the flange (190) is arranged on the battery cell body (170).

9. The battery (100) according to claim 3 or claim 4, wherein at least one of the connecting and limiting member (130) and the sealing body (1421) is a rigid member, and at least one of the first sealing member (141) and the sealing end (1422) is an elastic member.

10. The battery (100) according to claim 4, wherein the connecting and limiting member (130) is a solid column, and at least one of the first sealing member (141) and the sealing end (1422) of the second sealing member (142) is a hollow column;
an inner diameter of the first sealing member (141) is larger than an outer diameter of the sealing end (1422), and/or an outer diameter of the limiting end (132) is larger than an inner diameter of the sealing end (1422).

11. An electronic device, comprising: a device body and the battery (100) according to any one of claims 1 to 10, wherein the device body has a chamber, and the battery (100) is disposed in the chamber;
the battery (100) is electrically connected to the device body and is configured to supply power to the device body.

## Patentansprüche

1. Batterie (100), umfassend: ein Gehäuse (110), ein leitfähiges Element (120), eine Dichtungsbaugruppe (140) und ein Verbindungs- und Begrenzungselement (130);
wobei das Gehäuse (110) einen Hohlraum (111) aufweist, das leitfähige Element (120) in dem Hohlraum (111) angeordnet ist; das Gehäuse (110) mit einem ersten Durchgangsloch (112) versehen ist, das leitfähige Element (120) mit einem zweiten Durchgangsloch (121) versehen ist; das zweite Durchgangsloch (121) und das erste Durchgangsloch (112) entsprechend zueinander angeordnet und miteinander verbunden sind und sich mindestens ein Teil der Dichtungsbaugruppe (140) in dem zweiten Durchgangsloch (121) befindet;
das Verbindungs- und Begrenzungselement (130) sich in dem Hohlraum (111) befindet und ein Begrenzungsende (132) aufweist, das durch das zweite Durchgangsloch (121) entlang einer Richtung von dem Hohlraum (111) nach außerhalb des Gehäuses (110) hindurchragt und mit der Dichtungsbaugruppe (140), die sich in dem zweiten Durchgangsloch (121) befindet, in Eingriff steht; die Dichtungsbaugruppe (140), die sich in dem zweiten Durchgangsloch (121) befindet, mit dem leitfähigen Element (120) in Eingriff steht;
**dadurch gekennzeichnet, dass**: das leitfähige Element (120) einen leitfähigen Körper (122) und einen Begrenzungsvorsprung (123) umfasst und der Begrenzungsvorsprung (123) auf einer Seite des leitfähigen Körpers (122) in der Nähe des ersten Durchgangslochs (112) angeordnet ist;
das zweite Durchgangsloch (121) ein erstes Teildurchgangsloch (1211) und ein zweites Teildurchgangsloch (1212) umfasst, die miteinander verbunden sind, das erste Teildurchgangsloch (1211) durch den leitfähigen Körper (122) verläuft und das zweite Teildurchgangsloch (1212) durch den Begrenzungsvorsprung (123) verläuft.

2. Batterie (100) nach Anspruch 1, wobei die Dichtungsbaugruppe (140) umfasst: ein erstes Dichtungselement (141) und ein zweites Dichtungselement (142); wobei das erste Dichtungselement (141) in dem Hohlraum (111) angeordnet und in dem zweiten Durchgangsloch (121) positioniert ist;
das zweite Dichtungselement (142) sich außerhalb des Gehäuses (110) befindet, mindestens ein Teil des zweiten Dichtungselements (142) durch das erste Durchgangsloch (112) hindurchragt und sich in dem zweiten Durchgangsloch (121) befindet, und das erste Dichtungselement (141) zwischen einer Lochwand des zweiten Durchgangslochs (121) und einer Außenwand des zweiten Dichtungselements (142) eingeklemmt ist;
das Begrenzungsende (132) durch das zweite Durchgangsloch (121) hindurchragt und mit dem zweiten Dichtungselement (142), das sich in dem zweiten Durchgangsloch (121) befindet, in Eingriff steht; das zweite Dichtungselement (142), das sich in dem zweiten Durchgangsloch (121) befindet, mit dem ersten Dichtungselement (141) in Eingriff steht; das erste Dichtungselement (141) mit dem leitfähigen Element (120) in Eingriff steht.

3. Batterie (100) nach Anspruch 2, wobei das zweite Dichtungselement (142) umfasst: einen Dichtungskörper (1421) und ein Dichtungsende (1422), wobei sich der Dichtungskörper (1421) außerhalb des Gehäuses (110) befindet und das Dichtungsende (1422) mit einer Seite des Dichtungskörpers (1421) in der Nähe des ersten Durchgangslochs (112) verbunden ist;
mindestens ein Teil des Dichtungsendes (1422) durch das erste Durchgangsloch (112) hindurchragt und sich in dem zweiten Durchgangsloch (121) befindet, und das erste Dichtungselement (141) zwischen der Lochwand des zweiten Durchgangslochs (121) und einer Außenwand des Dichtungsendes (1422) eingeklemmt ist;
das Begrenzungsende (132) durch das zweite Durchgangsloch (121) hindurchragt und mit dem Dichtungsende (1422), das sich in dem zweiten Durchgangsloch (121) befindet, in Eingriff steht, und das Dichtungsende (1422), das sich in dem zweiten Durchgangsloch (121) befindet, mit dem ersten Dichtungselement (141) in Eingriff steht.

4. Batterie (100) nach Anspruch 3, wobei das Verbindungs- und Begrenzungselement (130) einen Verbindungskörper (131) umfasst; das Begrenzungsende (132) an einem von dem ersten Durchgangsloch (112) abgewandten Endabschnitt mit dem Verbindungskörper (131) verbunden ist;
der Verbindungskörper (131) nacheinander durch das zweite Durchgangsloch (121) und das erste Durchgangsloch (112) ragt, das Begrenzungsende (132) durch das zweite Durchgangsloch (121) ragt und mit dem Dichtungsende (1422), das sich in dem zweiten Durchgangsloch (121) befindet, in Eingriff steht, und das Dichtungsende (1422), das sich in dem zweiten Durchgangsloch befindet, mit dem ersten Dichtungselement (141) in Eingriff steht.

5. Batterie (100) nach einem der Ansprüche 2 bis 4, ferner umfassend: ein erstes Isolierelement (150), das in dem Hohlraum (111) angeordnet ist und zwischen dem leitfähigen Element (120) und dem Gehäuse (110) angeordnet ist;
wobei das erste Isolierelement (150) mit einer ersten Durchgangsöffnung (151) versehen ist und die erste Durchgangsöffnung (151) entsprechend dem ersten Durchgangsloch (112) bzw. dem zweiten Durchgangsloch (121) angeordnet und damit verbunden ist.

6. Batterie (100) nach Anspruch 5, ferner umfassend: ein zweites Isolierelement (160), das außerhalb des Gehäuses (110) angeordnet ist und sich zwischen dem zweiten Dichtungselement (142) und dem Gehäuse (110) befindet;
wobei das zweite Isolierelement (160) mit einer zweiten Durchgangsöffnung (161) versehen ist und die zweite Durchgangsöffnung (161) entsprechend der ersten Durchgangsöffnung (151), dem ersten Durchgangsloch (112) bzw. dem zweiten Durchgangsloch (121) angeordnet und damit verbunden ist.

7. Batterie (100) nach Anspruch 4, wobei das erste Dichtungselement (141) in dem ersten Teildurchgangsloch (1211) angeordnet ist, mindestens ein Teil des Dichtungsendes (1422) in dem ersten Teildurchgangsloch (1211) angeordnet ist; das Begrenzungsende (132) in dem ersten Teildurchgangsloch (1211) angeordnet ist und der Begrenzungsvorsprung (123) an dem Begrenzungsende (132) anliegt.

8. Batterie (100) nach einem der Ansprüche 1 bis 4, ferner umfassend: einen Batteriezellkörper (170), eine Laschenanordnung (180) und einen Flansch (190);
wobei der Batteriezellkörper (170) in dem Hohlraum (111) angeordnet ist, die Laschenanordnung (180) an einer Seite des Batteriezellkörpers (170) nahe dem ersten Durchgangsloch (112) angeordnet ist und das leitfähige Element (120) mit der Laschenanordnung (180) verbunden ist;
der Flansch (190) an dem Batteriezellkörper (170) angeordnet ist.

9. Batterie (100) nach Anspruch 3 oder Anspruch 4, wobei mindestens eines von dem Verbindungs- und Begrenzungselement (130) und dem Dichtungskörper (1421) ein starres Element ist und mindestens eines von dem ersten Dichtungselement (141) und dem Dichtungsende (1422) ein elastisches Element ist.

10. Batterie (100) nach Anspruch 4, wobei das Verbindungs- und Begrenzungselement (130) eine feste Säule ist und mindestens eines von dem ersten Dichtungselement (141) und dem Dichtungsende (1422) des zweiten Dichtungselements (142) eine hohle Säule ist;
ein Innendurchmesser des ersten Dichtungselements (141) größer als ein Außendurchmesser des Dichtungsendes (1422) ist und/oder ein Außendurchmesser des Begrenzungsendes (132) größer als ein Innendurchmesser des Dichtungsendes (1422) ist.

11. Elektronische Vorrichtung, umfassend: einen Vorrichtungskörper und die Batterie (100) nach einem der Ansprüche 1 bis 10, wobei der Vorrichtungskörper eine Kammer aufweist und die Batterie (100) in der Kammer angeordnet ist;
die Batterie (100) elektrisch mit dem Vorrichtungskörper verbunden und so konfiguriert ist, dass sie dem Vorrichtungskörper Strom zuführt.

## Revendications

1. Une batterie (100), comprenant : un boîtier (110), un élément conducteur (120), un ensemble d'étanchéité (140) et un élément de connexion et de limitation (130) ;
dans laquelle le boîtier (110) a une cavité (111), l'élément conducteur (120) est agencé dans la cavité (111) ; le boîtier (110) est muni d'un premier trou traversant (112), l'élément conducteur (120) est muni d'un second trou traversant (121) ; le second trou traversant (121) et le premier trou traversant (112) sont agencés de manière à correspondre et à être interconnectés l'un à l'autre, et au moins une partie de l'ensemble d'étanchéité (140) est située dans le second trou traversant (121) ;
l'élément de connexion et de limitation (130) est situé dans la cavité (111) et a une extrémité de limitation (132) pénétrant à travers le second trou traversant (121) le long d'une direction allant de la cavité (111) à l'extérieur du boîtier (110) et équipée de l'ensemble d'étanchéité (140) situé dans le second trou traversant (121) ; l'ensemble d'étanchéité (140) situé dans le second trou traversant (121) est équipé de l'élément conducteur (120) ;
**caractérisée en ce que** : l'élément conducteur (120) comprend un corps conducteur (122) et un bossage de limitation (123), et le bossage de limitation (123) est agencé sur un côté du corps conducteur (122) à proximité du premier trou traversant (112) ;
le second trou traversant (121) comprend un premier trou traversant secondaire (1211) et un second trou traversant secondaire (1212) qui sont connectés l'un à l'autre, le premier trou traversant secondaire (1211) traverse le corps conducteur (122), et le second trou traversant secondaire (1212) traverse le bossage de limitation (123).

2. La batterie (100) selon la revendication 1, dans laquelle l'ensemble d'étanchéité (140) comprend : un premier élément d'étanchéité (141) et un second élément d'étanchéité (142) ; le premier élément d'étanchéité (141) est disposé dans la cavité (111) et situé dans le second trou traversant (121) ;
le second élément d'étanchéité (142) est situé à l'extérieur du boîtier (110), au moins une partie du second élément d'étanchéité (142) pénètre à travers le premier trou traversant (112) et est situé dans le second trou traversant (121), et le premier élément d'étanchéité (141) est manchonné entre une paroi de trou du second trou traversant (121) et une paroi extérieure du second élément d'étanchéité (142) ;
l'extrémité de limitation (132) pénètre à travers le second trou traversant (121) et est équipée du second élément d'étanchéité (142) situé dans le second trou traversant (121) ; le second élément d'étanchéité (142) situé dans le second trou traversant (121) est équipé du premier élément d'étanchéité (141) ; le premier élément d'étanchéité (141) est équipé de l'élément conducteur (120).

3. La batterie (100) selon la revendication 2, dans laquelle le second élément d'étanchéité (142) comprend : un corps d'étanchéité (1421) et une extrémité d'étanchéité (1422), le corps d'étanchéité (1421) est situé à l'extérieur du boîtier (110), et l'extrémité d'étanchéité (1422) est connectée à un côté du corps d'étanchéité (1421) à proximité du premier trou traversant (112) ;
au moins une partie de l'extrémité d'étanchéité (1422) pénètre à travers le premier trou traversant (112) et est située dans le second trou traversant (121), et le premier élément d'étanchéité (141) est manchonné entre la paroi de trou du second trou traversant (121) et une paroi extérieure de l'extrémité d'étanchéité (1422) ;
l'extrémité de limitation (132) pénètre à travers le second trou traversant (121) et est équipée de l'extrémité d'étanchéité (1422) située dans le second trou traversant (121), et l'extrémité d'étanchéité (1422) située dans le second trou traversant (121) est équipée du premier élément d'étanchéité (141).

4. La batterie (100) selon la revendication 3, dans laquelle l'élément de connexion et de limitation (130) comprend un corps de connexion (131) ; l'extrémité de limitation (132) est connectée au corps de connexion (131) à une partie d'extrémité éloignée du premier trou traversant (112) ;
le corps de connexion (131) pénètre séquentiellement à travers le second trou traversant (121) et le premier trou traversant (112), l'extrémité de limitation (132) pénètre à travers le second trou traversant (121) et est équipée de l'extrémité d'étanchéité (1422) située dans le second trou traversant (121), et l'extrémité d'étanchéité (1422) située dans le second trou traversant est équipée du premier élément d'étanchéité (141).

5. La batterie (100) selon l'une quelconque des revendications 2 à 4, comprenant en outre : un premier élément isolant (150) agencé dans la cavité (111) et situé entre l'élément conducteur (120) et le boîtier (110) ;
dans laquelle le premier élément isolant (150) est muni d'un premier trou de pénétration (151), et le premier trou de pénétration (151) est agencé de manière à correspondre au premier trou traversant (112) et au second trou traversant (121) et à être interconnecté avec le premier trou traversant (112) et le second trou traversant (121), respectivement.

6. La batterie (100) selon la revendication 5, comprenant en outre : un second élément isolant (160) agencé à l'extérieur du boîtier (110) et situé entre le second élément d'étanchéité (142) et le boîtier (110) ;
dans laquelle le second élément isolant (160) est muni d'un second trou de pénétration (161), et le second trou de pénétration (161) est agencé de manière à correspondre au premier trou de pénétration (151), au premier trou traversant (112) et au second trou traversant (121) et à être interconnecté avec le premier trou de pénétration (151), le premier trou traversant (112) et le second trou traversant (121), respectivement.

7. La batterie (100) selon la revendication 4, dans laquelle le premier élément d'étanchéité (141) est situé dans le premier trou traversant secondaire (1211), au moins une partie de l'extrémité d'étanchéité (1422) est située dans le premier trou traversant secondaire (1211) ; l'extrémité de limitation (132) est située dans le premier trou traversant secondaire (1211), et le bossage de limitation (123) vient en butée contre l'extrémité de limitation (132).

8. La batterie (100) selon l'une quelconque des revendications 1 à 4, comprenant en outre : un corps de cellule de batterie (170), un ensemble de languette (180) et une bride (190) ;
dans laquelle le corps de cellule de batterie (170) est agencé dans la cavité (111), l'ensemble de languette (180) est agencé sur un côté du corps de cellule de batterie (170) à proximité du premier trou traversant (112), et l'élément conducteur (120) est connecté à l'ensemble de languette (180) ;
la bride (190) est agencée sur le corps de cellule de batterie (170).

9. La batterie (100) selon la revendication 3 ou la revendication 4, dans laquelle au moins l'un de l'élément de connexion et de limitation (130) et du corps d'étanchéité (1421) est un élément rigide, et au moins l'un du premier élément d'étanchéité (141) et de l'extrémité d'étanchéité (1422) est un élément élastique.

10. La batterie (100) selon la revendication 4, dans laquelle l'élément de connexion et de limitation (130) est une colonne pleine, et au moins l'un du premier élément d'étanchéité (141) et de l'extrémité d'étanchéité (1422) du second élément d'étanchéité (142) est une colonne creuse ;
un diamètre intérieur du premier élément d'étanchéité (141) est plus grand qu'un diamètre extérieur de l'extrémité d'étanchéité (1422) et/ou un diamètre extérieur de l'extrémité de limitation (132) est plus grand qu'un diamètre intérieur de l'extrémité d'étanchéité (1422).

11. Un dispositif électronique, comprenant : un corps de dispositif et la batterie (100) selon l'une quelconque des revendications 1 à 10, dans lequel le corps de dispositif a une chambre et la batterie est située dans la chambre ;
la batterie (100) est électriquement connectée au corps de dispositif et est configurée pour alimenter le corps de dispositif.
